# EUROPEAN PATENT APPLICATION

(11) **EP 2 275 866 A1**
(43) Date of publication of application: **19.01.2011**
(21) Application number: 10007220.6
(22) Date of filing: 13.07.2010
(51) Int. Cl.: G03B 21/14, H04N 9/31

(54) **Video projector**

(30) Priority: 16.07.2009 JP 2009168178
(71) Applicant: Sanyo Electric Co., Ltd., Osaka 570-8677 (JP)
(72) Inventor: Shiotsu, Shinichi, Moriguchi-shi, Osaka 570-8677 (JP)
(74) Representative: Glawe, Delfs, Moll

(57) **Abstract**

A projector includes a lamp used as a light source, a lamp driver that drives the lamp by supplying a lamp current to the lamp, and a control unit that controls the lamp current with the lamp driver. The control unit controls the lamp current that is supplied when commencing illumination of the lamp in correspondence with an activation frequency of the lamp.

## Description

This application is based upon and claims the benefit of priority from prior Japanese Patent Application No. 2009-168178, filed on July 16, 2009, the entire contents of which are incorporated herein by reference.

The present invention relates to a video projector that uses a lamp to project light.

A video projector uses a lamp, such as an ultra-high pressure mercury lamp, to project light. The lamp is driven with a lamp current supplied from a lamp driver.

When commencing illumination of the lamp, that is, when turning on the lamp, a known technique restricts the lamp current to lengthen the life of the lamp. For example, Japanese Laid-Open Patent Publication No. 2007-265860 describes controlling the lamp current in accordance with the temperature of the lamp. Japanese Laid-Open Patent Publication No. 2007-322456 describes controlling the lamp current in accordance with the voltage applied to the lamp.

The inventor of the present invention has noticed that the prior art control for restricting the lamp current is insufficient for lengthening the lamp life in an application in which the power is frequently switched on and off.

One aspect of the present invention is a video projector including a lamp used as a light source. A lamp driver drives the lamp by supplying a lamp current to the lamp. A control unit controls the lamp current with the lamp driver. The control unit controls the lamp current that is supplied when commencing illumination of the lamp in correspondence with an activation frequency of the lamp.

Other aspects and advantages of the present invention will become apparent from the following description, taken in conjunction with the accompanying drawings, illustrating by way of example the principles of the invention.

The invention, together with objects and advantages thereof, may best be understood by reference to the following description of the presently preferred embodiments together with the accompanying drawings in which:
Fig. 1 is a block diagram of a projector according to a first embodiment of the present invention;
Fig. 2 is a graph showing the relationship between the elapsed time from when lamp illumination is commenced and the lamp voltage;
Fig. 3 is a flowchart illustrating the selection of an illumination mode;
Fig. 4 is a diagram showing an illumination mode selection screen;
Fig. 5 is a table showing illumination commencing currents in association with illumination modes;
Fig. 6 is a flowchart illustrating a process for determining the lamp illumination commencing current;
Fig. 7 is a graph showing the relationship between the lamp voltage and the lamp current;
Fig. 8 is a flowchart illustrating a process for calculating the illumination time of the lamp in accordance with a second embodiment of the present invention;
Fig. 9 is a graph showing the relationship between the average illumination duration time of the lamp and the lamp illumination commencing current; and
Fig. 10 is a flowchart illustrating a process for determining the lamp illumination commencing current in the second embodiment.

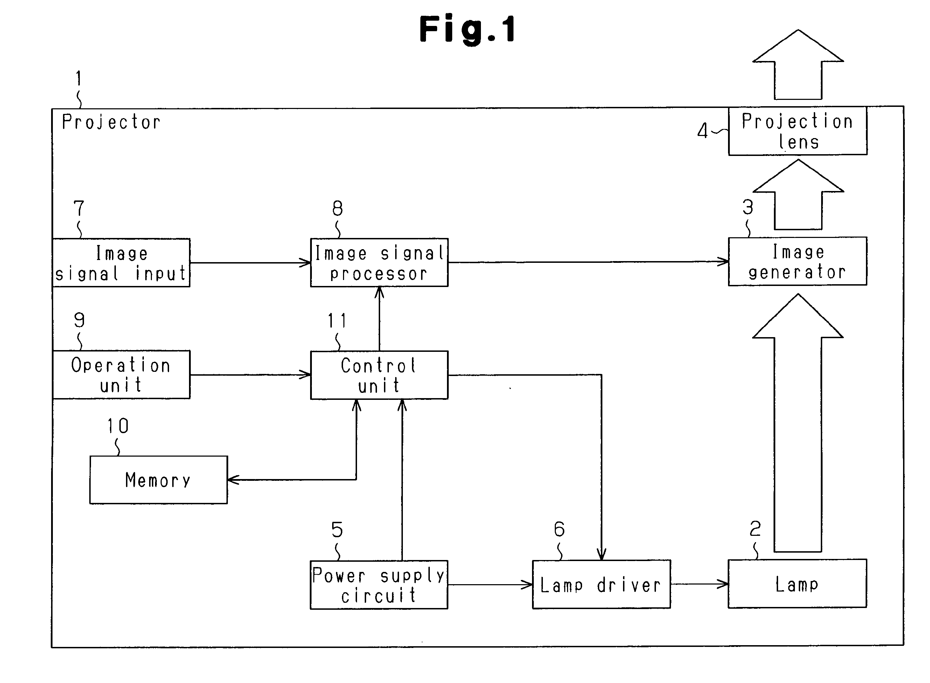

A video projector according to one embodiment of the present invention is embodied in a projector 1 that projects an image onto a display surface based on an image signal received from an external device. A first embodiment of the present invention will now be discussed with reference to Figs. 1 to 7.

The optical components of the projector 1 will first be described. As shown in Fig. 1, the projector 1 includes a lamp 2 which is used as a light source for displaying an image, an image generator 3 which generates an image using the light emitted from the lamp 2, and a projection lens 4 which enlarges the image generated by the image generator 3 and projects the image.

The lamp 2 may be a discharge lamp such as an ultra-high pressure mercury lamp or metal halide lamp. When supplied with power in an off state, the lamp 2 switches to an on state. In the illustrated example, the lamp 2 includes an arc tube in which mercury is sealed. Applying voltage between electrodes in the arc tube produces an arc discharge that emits light from the lamp 2.

The image generator 3 may be of a transmissive type or reflective type. One example of a transmissive type uses liquid crystal light valves. One example of a reflective type uses a digital micromirror device (DMD), which includes microscopic mirrors arranged in a grid. The image generator 3 is operated in accordance with the received image signal. The light emitted from the lamp 2 is transmitted through or reflected by the image generator 3 to generate an image to be projected.

The projection lens 4 may be formed by a single lens or a plurality of lenses for projecting the light of the image generated by the image generator 3. The projection lens 4 projects the light of an image onto a plane, such as a screen or wall, to display the image on the screen or wall.

The power supply system of the projector 1 will now be described. The projector 1 includes a power supply circuit 5, which supplies power to each part of the projector 1, and a lamp driver 6, which supplies the lamp 2 with power to drive the lamp 2.

The power supply circuit 5 boosts the voltage of commercial power to generate a DC voltage of, for example, 300 to 400 V and supplies the lamp driver 6 with power for driving the lamp 2. In the illustrated example, the power supply circuit 5 also supplies power to a control unit 11 of the projector 1 in addition to the lamp driver 6.

The lamp driver 6 is connected to the lamp 2, the power supply circuit 5, and the control unit 11. The lamp driver 6 may include a lamp ballast circuit, which supplies the lamp 2 with stable power regardless of changes in the resistance (load resistance) of the lamp 2, and an igniter circuit, which causes an insulation breakdown between the electrodes in the lamp 2. The lamp driver 6 is operated by the power obtained from the power supply circuit 5 and supplies the lamp 2 with power. The lamp driver 6 generates lamp current in accordance with a control signal provided from the control unit 11. The lamp driver 6 supplies the lamp 2 with controlled lamp current to drive (illuminate) the lamp 2.

In a state in which lamp current is being continuously supplied, the lamp 2 is on and illuminated. In a state in which the supply of lamp current is stopped, the lamp 2 is off. In the present specification, "a state in which lamp current is being continuously supplied" is referred to as "power on", and "a state in which the supply of lamp current is stopped" is referred to as "power off". Accordingly, the terms power on and power off indicate the state of the projector 1. In a power on state, each part of the projector 1 is also supplied with power. In a power off state, the supply of power to each part of the projector 1 is stopped. For components used to switch on the power for the projector 1, the supply of power does not have to be stopped even when the projector 1 is in a power off state.

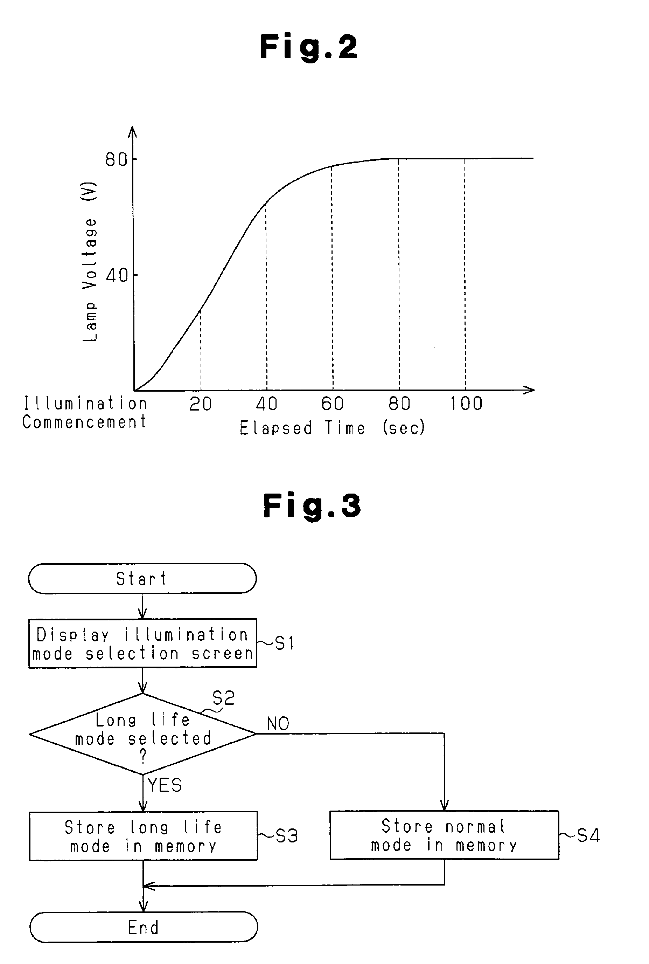

Changes in the lamp voltage will now be described with reference to Fig. 2. As shown in Fig. 2, at the point of time when illumination of the lamp 2 is commenced, the lamp voltage is relatively low. As time elapses from the illumination commencement point, the lamp voltage increases and then becomes substantially constant. In the example of Fig. 2, the lamp voltage becomes substantially constant at approximately 80 V after about sixty seconds elapses from the illumination commencement of the lamp 2.

Image signal processing of the projector 1 will now be described. The projector 1 includes an image signal input 7 and an image signal processor 8. The image signal input 7 receives an image signal from an external device connected to the projector 1. The image signal processor 8 operates the image generator 3 in accordance with the image signal.

The image signal input 7 may include terminals that are connectable to an external device, such as a personal computer (PC) or a DVD player, via a component cable or the like. The image signal input 7 receives an image signal from the external device.

The image signal processor 8 performs various types of signal processing on the image signals provided to the projector 1 from the image signal input 7. The image signal processor 8 performs signal processing that superimposes an on screen display (OSD) screen on an image in accordance with a control signal provided from the control unit 11. The image signal processor 8 provides the image generator 3 with an image signal that has undergone the signal processing.

The control of the projector 1 will now be described. The projector 1 includes an operation unit 9, which is operated by a user, a memory 10, which stores information for controlling each part of the projector 1, and the control unit 11, which controls each part of the projector 1.

The operation unit 9 includes a power button, which is for switching between power on and power off states, a menu button, which is for moving a cursor on the OSD screen, and a select button, which is for selecting an item marked by the cursor. An operation signal corresponding to the operation of the operation unit 9 is provided from the operation unit 9 to the control unit 11. Examples of the operation signal includes a power on signal instructing switching from a power off state to a power on state, a power off signal instructing switching from a power on state to a power off state, a cursor movement signal for instructing cursor movement, and a selection signal (illumination mode selection signal) for designating the item marked by the cursor as a selection item.

The memory 10 is a non-volatile memory and may be, for example, an EEPROM and the like. Information related to the OSD screen and operational program codes for the control unit 11 are stored beforehand in the memory 10.

The control unit 11 provides the lamp driver 6 and the image signal processor 8 with a control signal based on operational program code stored in the memory 10 and the operation signal from the operation unit 9. The lamp current is controlled in accordance with the control signal from the control unit 11. The control unit 11 may also control circuits other than the lamp driver 6 and the image signal processor 8 that are not illustrated in the drawings.

In the illustrated example, the memory 10 is discrete from the control unit 11. However, the memory 10 may be incorporated in the control unit 11. The control unit 11, the image signal processor 8, and other circuits may be formed by a single central processing unit (CPU). In such cases, the structure of the projector 1 is simplified.

The control unit 11 controls the lamp current when commencing illumination in correspondence with the activation frequency of the lamp 2.

The projector 1 of the present embodiment includes a plurality of illumination modes. A user of the projector 1 uses the operation unit 9 to select one of the illumination modes.

The illumination modes are respectively associated with various applications of the projector 1. Selection of the illumination mode supplies the lamp 2 with lamp current suitable for the corresponding application of the projector 1. In the illustrated example, the projector 1 includes two selectable illumination modes, namely, a normal mode and a long life mode. The normal mode is suitable when using the projector 1 under a situation in which the lamp 2 is continuously illuminated for one hour or longer, such as when using the projector 1 for a presentation during a conference. The long life mode is suitable when using the projector 1 under a situation in which the lamp 2 is repetitively switched on an off, such as when the lamp 2 is on for ten minutes and off for ninety minutes. For example, the long life mode is suitable when using the projector 1 to show advertisements in a movie theater.

The selection of the illumination mode will now be described. The processing shown in Fig. 3 is triggered, for example, by an OSD screen display signal provided from the control unit 11 when the operation unit 9 is operated.

First, the projector 1 displays an illumination mode selection screen to allow the user to select either one of the normal mode and the long life mode (step S1).

More specifically, in step S1, the control unit 11 provides a control signal to the image signal processor 8. In response to the control signal, the image signal processor 8 performs a process for superimposing the OSD screen on an image. Accordingly, in step S1, the image generator 3 and the projection lens 4 displays an image on which the OSD image is superimposed as the illumination mode selection screen.

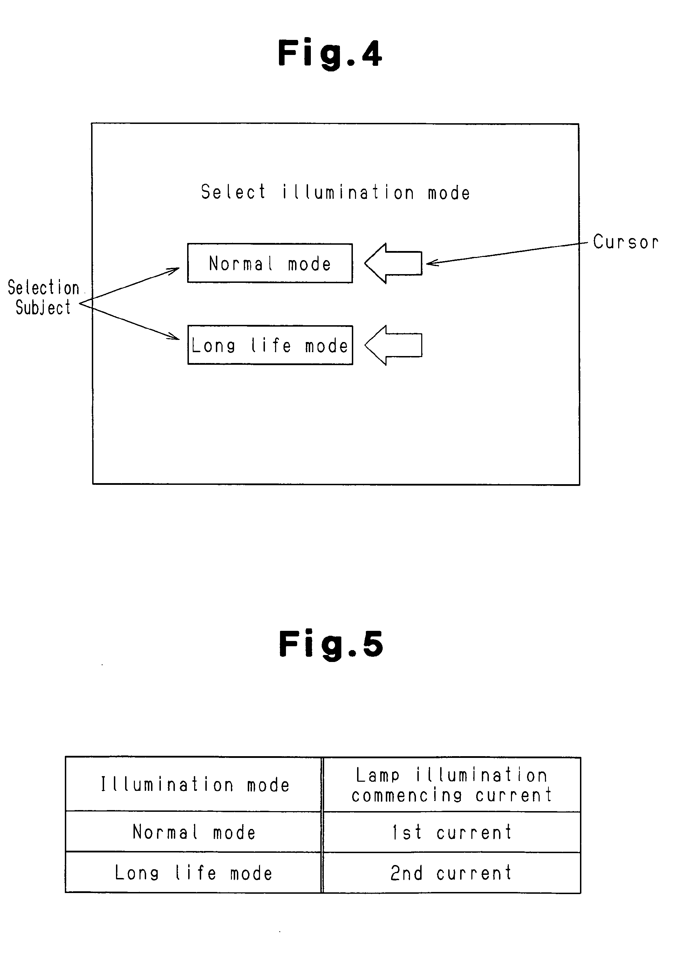

For example, as shown in Fig. 4, the illumination mode selection screen shows the illumination modes, which are selection subject items, and the cursor. The user operates the operation unit 9 while referring to the illumination mode selection screen to move the cursor and select the desired illumination mode.

Then, the projector 1 determines whether or not the long life mode has been selected (step S2). The control unit 11 carries out this determination based on a cursor movement signal and selection signal, which corresponds to the operation of the operation unit 9.

When the long life mode is selected in step S2, the control unit 11 proceeds to step S3 and stores information of the long life mode in the memory 10 to set the illumination mode of the lamp 2 to the long life mode.

When the long life mode is not selected in step S2, the control unit 11 proceeds to step S4 and stores information of the normal mode in the memory 10 to set the illumination mode of the lamp 2 to the normal mode. The information of the illumination mode stored in the memory 10 includes the lamp current value when commencing illumination.

In this manner, the illumination mode of the lamp 2 is set for the projector 1. When the projector 1 enters a power on state the next time, the control unit 11 controls the lamp current based on the information of the selected illumination mode stored in the memory 10.

The difference between the normal mode and the long life mode will now be described in detail. As shown in Fig. 5, the lamp current when commencing illumination differs between the normal mode and the long life mode. For example, a second current, which is associated with the long life mode, is smaller than a first current, which is associated with the normal mode. The first current may be 3 A, and the second current may be 2A. There is no difference in the illumination control of the lamp 2 between the normal mode and the long life mode except in the amount of the lamp illumination commencing current.

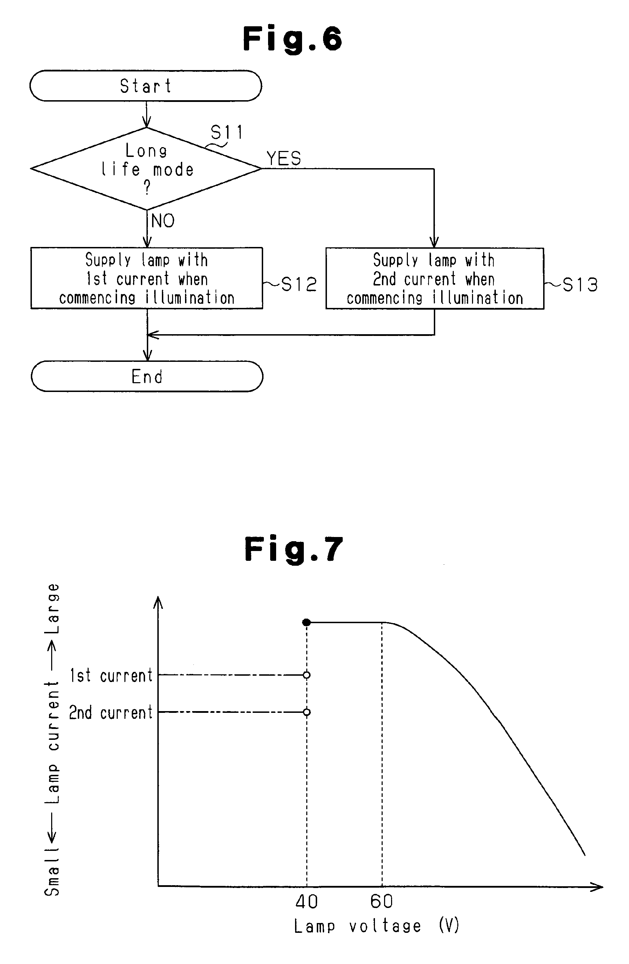

The operation of the projector 1 will now be described. The control flow shown in Fig. 6 is triggered by a power on signal provided from the control unit 11 when the operation unit 9 is operated.

First, when the projector 1 is switched to a power on state, the projector 1 determines whether or not the illumination mode is the long life mode (step S11). More specifically, in step S11, the control unit 11 obtains the illumination mode information stored in the memory 10 and determines from the information whether the selected illumination mode is the normal mode or the long life mode. In the illustrated example, the control unit 11 determines whether or not the long life mode has been selected.

When the long life mode is not selected in step S11, the lamp driver 6 supplies the lamp 2 with the first current to commence illumination (step S12). More specifically, in step S12, the control unit 11 provides the lamp driver 6 with a control signal to supply the deactivated lamp 2 with the second current. The lamp driver 6 supplies the lamp 2 with the second current in accordance with the control signal.

In this manner, the lamp 2 is supplied with the first current or the second current when commencing illumination. When supplied with the first current or the second current, the lamp 2 commences illumination.

The values of the first current and second current may be included in the operation program codes of the control unit 11 stored beforehand in the memory 10. Alternatively, a table associating lamp illumination commencing current values with the illumination modes (Fig. 5) may be stored beforehand in the memory 10. In accordance with the illumination mode selected with the operation unit 9, the control unit 11 obtains the associated current value from the memory 10. Then, the control unit 11 controls the lamp driver 6 so as to supply the lamp 2 with the lamp illumination commencing current having the obtained current value (first current value or second current value).

The lamp current will now be described with reference to Fig. 7. When the lamp voltage is greater than or equal to a predetermined first voltage, the lamp driver 6 supplies the lamp 2 with current that is controlled to supply the lamp 2 with constant power. In the example of Fig. 7, the predetermined first voltage is 60V. When the lamp voltage is 60 V or higher, the lamp current gradually decreases as the lamp voltage increases.

When the lamp voltage is in a predetermined range between the predetermined first voltage and a predetermined second voltage, the lamp driver 6 supplies the lamp 2 with a relatively large constant current that is controlled to supply the lamp 2 with sufficient power. The relatively large constant current may be referred to as a constant rapid rise current. In the example of Fig. 7, the predetermined range is less than 60 V and greater than or equal to 40V. When the voltage applied to the lamp 2 is less than 60 V and greater than or equal to 40V, the lamp 2 is supplied with a constant current that is greater than the first and second currents.

When the voltage applied to the lamp 2 is less than the second predetermined value (predetermined voltage), the lamp driver 6 supplies the lamp 2 with either one of the first current and the second current in accordance with the illumination mode selected by the user. In the example of Fig. 7, when the voltage applied to the lamp 2 is less than 40 V, the lamp 2 is supplied with the first current or the second current. The first current and the second current are restricted to be smaller than when the lamp voltage is less than 60 V and greater than or equal to 40V.

When the lamp voltage is small, the elapsed time from when illumination of the lamp 2 is commenced is short. For instance, in the examples of Figs. 2 and 7, the lamp voltage is less than 40 V for a period shorter than thirty seconds from when illumination of the lamp 2 is commenced. In the present specification, "illumination commencement" is defined as the period required for the lamp voltage to become greater than or equal to a predetermined voltage (in the example shown in Fig. 7, 40 V or greater). Accordingly, the lamp illumination commencing current (first current or second current), which corresponds to the activation frequency of the lamp 2 and which is determined when the power of the projector 1 is switched on, is continuously supplied to the lamp 2 during the period from when commencing the illumination of the lamp 2 to when the lamp voltage becomes greater than or equal to the predetermined voltage.

The control unit 11 may measure the elapsed time from when the illumination of the lamp 2 is commenced to determine the timing for switching from the lamp illumination commencing current (first current or second current) to the constant rapid rise current based on the measured elapsed time. The lamp voltage may be monitored with, for example, a lamp voltage sensor.

As described above, the control unit 11 is configured to control the illumination commencing lamp current in accordance with the activation frequency of the lamp 2. In the illustrated example, the user selects the illumination mode in association with the activation frequency of the lamp 2. The control unit 11 determines whether or not the activation frequency of the lamp 2 is high based on the illumination mode selected with the operation unit 9. When the selected illumination mode is the normal mode, the control unit 11 determines that the activation frequency of the lamp 2 is low. When the selected illumination mode is the long life mode, the control unit 11 determines that the activation frequency of the lamp 2 is high. When determining that the activation frequency of the lamp 2 is not high, the control unit 11 controls the lamp driver 6 so as to supply the lamp 2 with the first current when commencing illumination. When determining that the activation frequency of the lamp 2 is high, the control unit 11 controls the lamp driver 6 so as to supply the lamp 2 with the second current when commencing illumination.

The activation frequency of the lamp 2 is related to the frequency with which the projector 1 is switched between power on and power off (i.e., the frequency with which the supply of current to the lamp 2 is started and stopped). For example, when an image is continuously displayed over a long period of time, the power of the projector 1 is not frequently switched on and off. In this case, the activation frequency of the lamp 2 is low. In contrast, when the display of an image ends after the image is displayed over a short period of time, the power of the projector 1 is frequently switched on and off. In this case, the activation frequency of the lamp 2 is high. The lamp receives a high load when commencing illumination of the lamp 2. There is a tendency for the life of the lamp 2 to become shorter as the activation frequency of the lamp 2 increases.

In an application in which the projector 1 is frequently switched between power on and power off, the control unit 11 illuminates the lamp 2 in the long life mode. This reduces the load applied to the lamp 2 when commencing illumination. In an application in which the projector 1 is not frequently switched between power on and power off, the control unit 11 illuminates the lamp 2 in the normal mode. This increases the illuminance of the light emitted from the lamp 2 more quickly than the long life mode.

The first embodiment has the advantages described below.
(1) The projector 1 includes the lamp driver 6, which drives the lamp 2 by supplying lamp current to the lamp 2, and the control unit 11, which controls the lamp driver 6. The control unit 11 controls the lamp current when commencing illumination in accordance with the activation frequency of the lamp 2. In a case in which the projector 1 is not frequently switched between power on and power off, the lamp 2 is supplied with the relatively large first current when commencing illumination. In another case in which the projector 1 is frequently switched between power on and power off, the lamp 2 is supplied with the relatively small second current when commencing illumination. When the activation frequency of the lamp 2 is high, the load applied to the lamp 2 when commencing illumination is reduced. This lengthens the life of the lamp 2.
(2) The projector 1 includes the operation unit 9, which is operable by a user, so as to allow the user to select one of the illumination modes set in accordance with the activation frequency of the lamp 2. Further, the operation unit 9 notifies the control unit 11 of the illumination mode selected by the user. The control unit 11 determines whether or not the activation frequency of the lamp 2 is high based on the illumination mode notified from the operation unit 9. This allows for the user to be involved in the determination of the control unit 11 and allows for the user operation to control the current supplied to the lamp 2 when commencing illumination.
(3) The projector 1 includes the memory 10, which stores the lamp illumination commencing current values (first current value and second current value) associated with a plurality of illumination modes. Thus, the control unit 11 obtains the lamp illumination commencing current value associated with the illumination mode notified from the operation unit 9. The control unit 11 then controls the lamp driver 6 based on the obtained lamp illumination commencing current value.
(4) The projector 1 includes the image generator 3 that generates an image of the illumination mode selection screen. This allows for the user to refer to the illumination mode selection screen and easily select the illumination mode that lengthens the life of the lamp 2.
(5) The control unit 11 determines whether or not the activation frequency of the lamp 2 is high. When determining that the activation frequency of the lamp 2 is not high, the control unit 11 controls the lamp driver 6 so that the lamp 2 is supplied with the first current when commencing illumination. When determining that the activation frequency of the lamp 2 is high, the control unit 11 controls the lamp driver 6 so that the lamp 2 is supplied with the second current when commencing illumination. Accordingly, when the activating frequency of the lamp 2 is high, the lamp 2 is supplied with a relatively small lamp current (second current). This reduces the load applied to the lamp 2.
(6) The lamp current corresponding to the activation frequency is continuously supplied from when illumination is commenced to when the lamp voltage becomes greater than or equal to the predetermined voltage. Thus, the lamp current is supplied to the lamp 2 until the voltage becomes suitable for driving the lamp 2. This lengthens the life of the lamp 2.

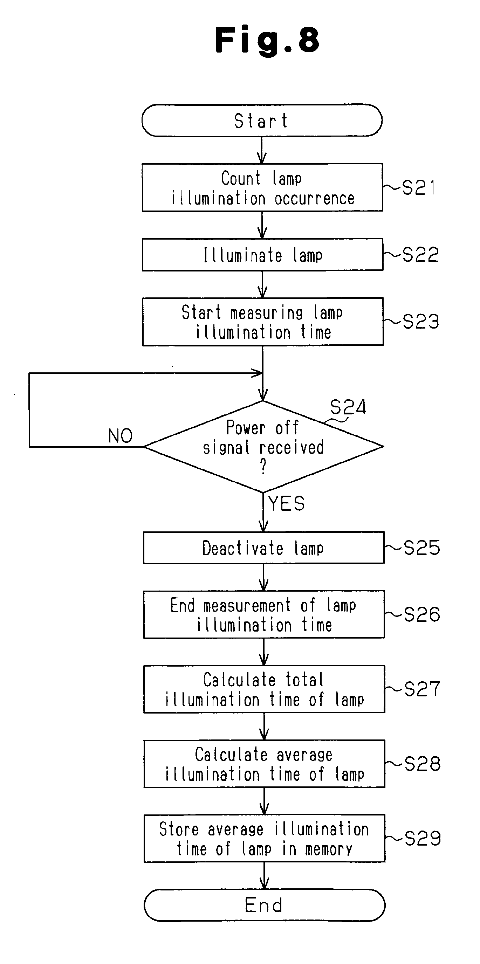

A second embodiment of the present invention will now be discussed with reference to Figs. 8 to 10. A video projector according to the present embodiment has a structure that is similar to that of the first embodiment. Thus, like or same reference numerals are given to those components that are the same as the corresponding components of the first embodiment. Such components will not be described below.

In the second embodiment, the control unit 11 controls the lamp illumination commencing current in accordance with the activation frequency of the lamp 2 without the user selecting the illumination mode. More specifically, the control unit 11 calculates an average illumination duration time of the lamp 2 and controls the lamp driver 6 in accordance with the average illumination duration time.

The control unit 11 calculates the illumination time of the lamp 2 in accordance with the control flow of Fig. 8 during the period from power on to power off of the projector 1. The control flow of Fig. 8 is triggered, for example, by a power on signal provided to the control unit 11 when the operation unit 9 is operated.

As shown in Fig. 8, the control unit 11 counts the number of times the lamp 2 is illuminated (step S21). More specifically, in step S21, the control unit 11 determines the total number of times the lamp 2 has been illuminated when the power goes on, namely, the total illumination occurrence. Here, the total illumination occurrence is the number of switching times from a power off state to a power on state. The control unit 11 increments the total illumination occurrence in response to the power on signal. The total illumination occurrence is stored in the memory 10 and not erased even when the projector 1 switches to a power off state.

Then, the lamp driver 6 supplies the lamp 2 with power to illuminate the lamp 2 (step S22). When the lamp 2 is illuminated, the control unit 11 starts measuring the illumination time of the lamp 2 (step S23). The control unit 11 may use a timer to measure the illumination time of the lamp 2.

In step S24, the control unit 11 determines whether or not it has received a power off signal generated when the operation unit 9 is operated. When the power off signal has not been received (NO in step S24), the control unit 11 repeats the operation of step S24 again. That is, the control unit 11 continues to measure the illumination time of the lamp 2 until the power off signal is received.

When the power off signal is received (YES in step S24), the control unit 11 stops supplying the lamp 2 with power and deactivates the lamp 2 (step S25). When the lamp 2 is deactivated, the control unit 11 ends the measurement of the illumination time of the lamp 2 (step S26).

Then, the control unit 11 uses the present illumination time of the lamp 2 measured in steps S23 to S26 to calculate (update) the total illumination time of the lamp 2 (step S27). The total illumination time is the accumulative illumination time from when the lamp 2 is first illuminated. The total illumination time is stored in the memory 10 and cannot be erased even when the projector 1 shifts to a power off state.

Next, the control unit 11 calculates an average illumination duration time of the lamp 2 for each power on period (step S28). The average illumination duration time is an index for the activation frequency of the lamp 2. More specifically, in step S28, the control unit 11 divides the total illumination time obtained in step S26 by the total illumination occurrence obtained in step S21 to calculate the average illumination duration time of the lamp 2.

The control unit 11 stores the calculated average illumination duration time in the memory 10 (step S29).

As described above, the average illumination duration time of the lamp 2 is stored in the memory 10. When the projector 1 shifts to a power on state the next time, the control unit 11 controls the lamp current based on the average illumination time of the lamp 2 that is stored in the memory 10.

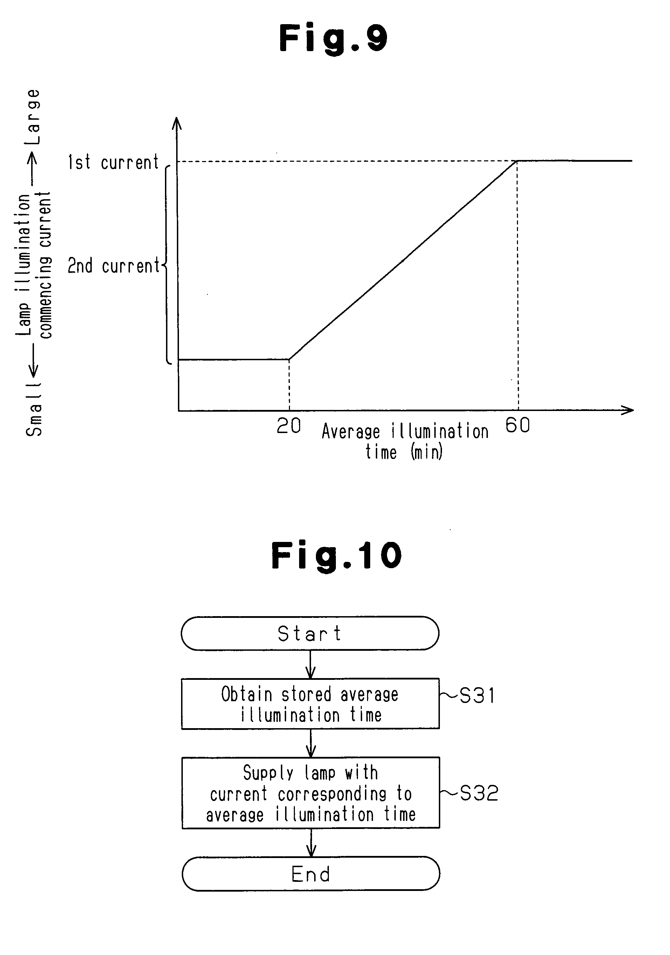

The lamp current determined in accordance with the average illumination time of the lamp 2 will now be described in detail. Referring to Fig. 9, when the average illumination time is greater than or equal to a predetermined reference time, the lamp 2 is supplied with the first current when illumination is commenced. The reference time is, for example, one hour. When the average illumination time is one hour or longer, the lamp 2 is supplied with the first current. The reference time may be stored in the memory 10.

When the average illumination time is less than the predetermined reference time, the lamp 2 is supplied with the second current, which is less than the first current, when illumination is commenced. In the example of Fig. 9, the lamp 2 is supplied with the second current when the average illumination time is less than one hour. In the present embodiment, the second current is set so as to vary continuously in accordance with the average illumination time. When the average illumination time is less than twenty minutes, the second current has a fixed minimum value. When the average illumination time is less than sixty minutes and greater than or equal to twenty minutes, the lamp 2 is supplied with the second current that decreases as the average illumination time becomes shorter. Accordingly, the lamp illumination commencing current is controlled more finely than the first embodiment. The second current is variable in accordance with the average illumination time. However, during the period the second current is being supplied before switching to the constant rapid rise current, the amount of the second current is constant (refer to Fig. 7).

The operation of the projector 1 will now be discussed. The control flow shown in Fig. 10 is triggered by a power on signal provided to the control unit 11 when the operation unit 9 is operated and ends before the lamp 2 is illuminated. That is, the control flow of Fig. 10 is performed before step S22 of Fig. 8.

As shown in Fig. 10, the control unit 11 first obtains the average illumination time stored in the memory 10 (step S31). The control unit 11 then controls the lamp driver 6 so that the lamp 2 is supplied with a lamp illumination commencing current that is in correspondence with the average illumination time when illumination is commenced (step S32).

When the average illumination time is not stored in the memory 10 (for example, the first time the projector 1 is used), the control unit 11 controls the lamp driver 6 so that the deactivated lamp 2 is supplied with current that is in correspondence with a default average illumination time (e.g., two hours).

As described above, the control unit 11 determines whether the activation frequency of the lamp 2 is high based on the usage state of the lamp 2. More specifically, the usage state of the lamp 2 is the illumination time of the lamp 2.

The control unit 11 determines that the activation frequency of the lamp 2 is low when the average illumination time of the lamp 2 is greater than or equal to a predetermined reference time. Further, the control unit 11 determines that the activation frequency of the lamp 2 is high when the average illumination time of the lamp 2 is less than the predetermined reference time. When determining that the activating frequency of the lamp 2 is low, the control unit 11 controls the lamp driver 6 to supply the lamp 2 with the first current when commencing illumination of the lamp 2. When determining that the activating frequency of the lamp 2 is high, the control unit 11 controls the lamp driver 6 to supply the lamp 2 with the second current when commencing illumination of the lamp 2.

In an application in which the projector 1 is frequently switched between power on and power off, the illumination time of the lamp 2 has a tendency for being short. In this case, the lamp 2 is supplied with the relatively small second current when commencing illumination of the lamp 2. This reduces the load applied to the lamp 2 when commencing illumination. In an application in which the projector 1 is not frequently switched between power on and power off, the illumination time of the lamp 2 has a tendency for being long. In this case, the lamp 2 is supplied with the relatively large first current when commencing illumination of the lamp 2. This quickly increases the illuminance of the light emitted from the lamp 2.

In addition to advantages (1), (5), and (6) of the first embodiment, the second embodiment has the advantages described below.
(7) The control unit 11 determines whether or not the activation frequency of the lamp 2 is high based on the usage state of the lamp 2. This allows for the control unit 11 to determine whether the activation frequency of the lamp 2 is high without the user being involved with the determination of the control unit 11.
(8) The control unit 11 may determine whether or not the activation frequency of the lamp 2 is high using the measured illumination time of the lamp 2.
(9) The reference used to determine the activation frequency of the lamp 2 is the average illumination time based on a plurality of repetitive illuminations. The use of the average illumination time of the lamp 2 improves the determination accuracy for the activation frequency of the lamp 2.
(10) The control 11 may determine whether or not the activation frequency of the lamp 2 is high by comparing the illumination time of the lamp 2 with the predetermined reference time.

It should be apparent to those skilled in the art that the present invention may be embodied in many other specific forms without departing from the scope of the invention. Particularly, it should be understood that the present invention may be embodied in the following forms.

In the second embodiment, the reference for determining the activation frequency of the lamp 2 is the average illumination time of the lamp 2. However, the determination reference is not limited to the average illumination time. For example, the control unit 11 may determine the lamp illumination commencing current in accordance with the preceding illumination time. In this case, the control unit 11 supplies the lamp 2 with the second current during illumination commencement when the preceding illumination time is less than a reference time.

The first embodiment and second embodiment may be combined. For example, the illumination modes for setting the illumination of the projector 1 may include the normal mode, the long life mode, and an auto mode. In this case, the auto mode determines whether or not the activation frequency of the lamp 2 is high based on the usage state of the lamp 2.

In the above-described embodiments, the operation unit 9 includes buttons or the like arranged on the projector 1. However, the operation unit 9 does not have to be arranged on the body of the projector 1. For example, the projector 1 may include a remote controller, and the operation unit 9 may be arranged as buttons or the like on the remote controller.

In the above-described embodiments, the image signal input 7 is formed by a terminal to which a cable is connected. However, the image signal input 7 may be formed by a wireless communication module including an antenna. In other words, the image signal may be input to the projector 1 by a wired means or a wireless means.

The present examples and embodiments are to be considered as illustrative and not restrictive, and the invention is not to be limited to the details given herein, but may be modified within the scope and equivalence of the appended claims.

## Claims

1. A video projector comprising:
a lamp used as a light source;
a lamp driver that supplies a lamp current to the lamp to drive the lamp; and
a control unit that controls the lamp current with the lamp driver, the video projector being **characterized in that** the control unit controls the lamp current that is supplied when commencing illumination of the lamp in correspondence with an activation frequency of the lamp.

2. The video projector according to claim 1, further comprising an operation unit operable by a user so as to allow the user to select one of a plurality of illumination modes set in accordance with the activation frequency of the lamp;
the video projector being **characterized in that** the control unit is notified by the operation unit of the illumination mode selected by the user and determines whether or not the activation frequency of the lamp is high based on the illumination mode selected by the user.

3. The video projector according to claim 2, further comprising a memory that stores a plurality of lamp illumination commencing current values respectively associated with the plurality of illumination modes;
the video projector being **characterized in that** the control unit obtains the lamp illumination commencing current value associated with the illumination mode based upon the notification from the operation unit of the selected mode and controls the lamp driver based on the obtained lamp illumination commencing value.

4. The video projector according to claim 2, further comprising:
an image generator that generates an image of an illumination mode selection screen.

5. The video projector according to one of claims 1 - 4, **characterized in that** the control unit determines whether or not the activation frequency of the lamp is high based on a usage state of the lamp.

6. The video projector according to claim 5, **characterized in that** the usage state of the lamp includes an illumination time of the lamp.

7. The video projector according to claim 6, **characterized in that** the illumination time of the lamp is an average illumination time based on a plurality of repetitive illuminations.

8. The video projector according to claim 6, **characterized in that** the control unit determines that the activation frequency of the lamp is high when the illumination time of the lamp is shorter than a predetermined reference time.

9. The video projector according to one of claims 1 - 8, **characterized in that** the control unit determines whether or not the activation frequency of the lamp is high, controls the lamp driver to supply the lamp with a first current during illumination commencement when determining that the activation frequency of the lamp is not high, and controls the lamp driver to supply the lamp with a second current, which is smaller than the first current, during illumination commencement when determining that the activation frequency of the lamp is high.

10. The video projector according to one of claims 1 - 9, **characterized in that** the lamp current that is in correspondence with the activation frequency of the lamp is continuously supplied from when illumination is commenced to when a lamp voltage becomes greater than or equal to a predetermined voltage.

11. The video projector according to claim 9, **characterized in that** the control unit measures an elapsed time from when illumination of the lamp is commenced and switches from the supply of the first current or the second current to a constant rapid rise current, which is greater than the first and second currents, based on the measured elapsed time.

12. The video projector according to claim 9, **characterized in that** the control unit switches from the supply of the first current or the second current to a constant rapid rise current, which is greater than the first and second currents, based on a detected value of a lamp voltage.

13. The video projector according to claim 9, **characterized in that** the first current or the second current is supplied to the lamp in a deactivated state.
